# EUROPÄISCHE PATENTANMELDUNG

(11) **EP 0 814 119 A1**
(43) Veröffentlichungstag der Anmeldung: **29.12.1997**
(21) Anmeldenummer: 97109454.5
(22) Anmeldetag: 11.06.1997
(51) Int. Cl.: C08K 3/00, C08K 13/02, C08L 25/02, C08J 9/00

(54) **Flammgeschützte Polystyrolschaumstoffe**

(30) Priorität: 21.06.1996 DE 19624827
(71) Anmelder: BASF Aktiengesellschaft, 67063 Ludwigshafen (DE)
(72) Erfinder: Scherzer, Dietrich, Dr., 67433 Neustadt (DE); Hahn, Klaus, Dr., 67281 Kirchheim (DE); Alicke, Gerhard, 67549 Worms (DE); Turznik, Gerhard, Dr., 67269 Grünstadt (DE); Dietzen, Franz-Josef, Dr., 67071 Ludwigshafen (DE); Ehrmann, Gerd, Dr., 67146 Deidesheim (DE); Hönl, Hans, Dr., 67271 Obersülzen (DE)

(57) **Zusammenfassung**

Die Erfindung betrifft flammgeschützte Schaumstoffplatten auf Basis von Styrolpolymerisaten, die als Flammschutzmittel mindestens 12 Gew.-% einer Mischung aus mindestens einem wasserabspaltenden Metallhydroxid und mindestens einer Phosphorverbindung enthalten.

## Beschreibung

Die Erfindung betrifft Schaumstoffplatten mit einer Dichte von 20 bis 200 g/l und einem Querschnitt von mindestens 50 cm² auf Basis von Styrolpolymerisaten, die mit halogenfreien Flammschutzmitteln ausgerüstet sind.

Extrudierte Polystyrolschaumstoffe (XPS) werden in großem Maß zum Isolieren von Gebäuden und Gebäudeteilen eingesetzt. Für diesen Zweck müssen sie flammfest ausgerüstet sein. Die zur Flammfestmachung von extrudierten Polystyrolschaumstoffen üblicherweise verwendeten Flammschutzmittel enthalten Halogene. Aus Umweltschutzgründen soll der Einsatz von Halogenen in Schaumstoffen verringert werden.

Der Erfindung lag daher die Aufgabe zugrunde, extrudierte Polystyrolschaumstoffe bereitzustellen, die die für den Einsatz im Bauwesen notwendige Brandklasse B 2 erreichen und unter Verzicht auf halogenhaltige Flammschutzmittel hergestellt wurden.

Diese Aufgabe wurde gelöst, indem als Flammschutzmittel eine Mischung aus einem wasserabspaltenden Metallhydroxid und einer Phosphorverbindung in einer Menge von ≥ 12 Gew.-%, bezogen auf das Styrolpolymerisat, eingesetzt werden.

Als wasserabspaltende Metallhydroxide werden vorzugsweise Magnesiumhydroxid und/oder Aluminiumhydroxid eingesetzt.

Als Phosphorverbindungen können anorganische oder organische Phosphate, Phosphite oder Phosphonate, oder auch roter Phosphor, eingesetzt werden. Bevorzugte Phosphorverbindungen sind beispielsweise Triphenylphosphat, Diphenylkresylphosphat, Ammoniumpolyphosphat oder Dimethylmethylphosphonat.

Die erfindungsgemäßen Schaumstoffplatten werden hergestellt, indem man ein Gemisch aus dem Styrolpolymerisat, 3 bis 15 Gew.-% eines flüchtigen Treibmittels und ≥ 12 Gew.-% einer Mischung aus einem wasserabspaltenden Metallhydroxid und einer Phosphorverbindung bei Temperaturen oberhalb des Schmelzpunktes des Styrolpolymerisats extrudiert und verschäumt. Das Gewichtsverhältnis von wasserabspaltendem Metallhydroxid und Phosphorverbindung beträgt vorzugsweise 1:1 bis 1:5.

Auch bei Mitverwendung brennbarer athermaner Partikel, wie Ruß, kann durch Einsatz der erfindungsgemäßen Flammschutzmittelkombination die Brandklasse B 2 nach DIN 4102 erreicht werden.

Da die organischen Phosphorverbindungen im Styrolpolymerisat als Weichmacher wirken, kann bei Einsatz derartiger Stoffe die Menge an Treibmittel reduziert werden.

Die Menge an Flammschutzmittel sollte 30 Gew.-% nicht überschreiten, da sich oberhalb dieser Menge die mechanischen Eigenschaften der Schaumstoffplatten stark verschlechtern.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen und Ethern.

Bevorzugte Treibmittelgemische sind daher:
a) 1 bis 100 Gew.-% Kohlendioxid,
b) bis zu 95 Gew.-% eines Ethers aus der Gruppe Dimethylether, Methylethylether und Methylvinylether,
c) bis zu 60 Gew.-% eines Alkohols oder Ketons mit einem Siedepunkt zwischen 56 und 100°C, und
d) bis zu 30 Gew.-% eines aliphatischen C₃-C₆-Kohlenwasserstoffs

Besonders bevorzugte Treibmittelgemische bestehen aus:
a) 20 bis 90 Gew.-% Kohlendioxid
b) 1 bis 30 Gew.-% Dimethylether,
c) 0 bis 60 Gew.-% Ethanol, und
d) bis zu 10 Gew.-% eines aliphatischen C₃-C₆-Kohlenwasserstoffs,
bzw. aus:
a) 20 bis 95 Gew.-% Kohlendioxid
c) 80 bis 5 Gew.-% Ethanol und
d) 0 bis 10 Gew.-% eines aliphatischen C₃-C₆-Kohlenwasserstoffs

Auch Kohlendioxid allein kann eingesetzt werden.

Die Treibmittel werden in einer Menge von 3 bis 15 Gew.-%, vorzugsweise 6 bis 12 Gew.-%, bezogen auf das Styrolpolymerisat, verwendet.

Als weitere übliche Zusatz- und/oder Hilfsstoffe können der Thermoplastmatrix Antistatika, Stabilisatoren, Farbstoffe, Füllstoffe, athermane Partikel, wie Ruß oder Metallpulver und/oder Keimbildner in üblichen Mengen zugesetzt werden.

Die in den folgenden Beispielen genannten Teile und Prozente beziehen sich auf das Gewicht:

Eine Mischung aus den in der Tabelle angegebenen Teilen Polystyrol und Flammschutzmittel wurde einem Extruder mit einem inneren Schneckendurchmesser von 53 mm kontinuierlich zugeführt und aufgeschmolzen. Durch eine in dem Extruder angebrachte Einlaßöffnung wurde ein Treibmittelgemisch von 3,5 % CO₂ und 3 % Ethanol, jeweils bezogen auf Polystyrol, kontinuierlich in den Extruder eingedrückt und in die Schmelze eingemischt. Das im Extruder gleichmäßig geknetete Schmelze-Treibmittelgemisch wurde sodann einem zweiten Extruder mit einem Schneckendurchmesser von 90 mm zugeführt und dort während einer Verweilzeit von ca. 10 min auf die zum Schäumen notwendige Temperatur abgekühlt. Diese gekühlte Schmelze wurde sodann durch eine Schlitzdüse mit 50 mm Breite in die Atmosphäre extrudiert. Der dabei entstehende Schaum wurde durch ein Werkzeug zu Platten mit 30 mm Dicke und 150 mm Breite geformt. So wurden gleichmäßige, geschlossenzellige und formstabile Schaumstoffkörper erhalten.

An den so erhaltenen Schaumstoffplatten wurde die Brennbarkeit nach DIN 4102 bestimmt.

Die Ergebnisse sind in der Tabelle festgehalten.

**Tabelle**

| Beispiel | Ruß (Gew.-%) | Mg(OH)2 | TPP (Gew.-%) | B2 DIN 4102 |
|---|---|---|---|---|
| 1 | - | - | 15 | nein |
| 2 | - | 15 | - | nein |
| 3 | - | 2 | 10 | ja |
| 4 | - | 4 | 8 | ja |
| 5 | - | 2 | 8 | nein |
| 6 | - | 2 | 6 | nein |
| 7 | - | 4 | 4 | nein |
| 8 | 4 | 5 | 15 | ja |
| TPP - Triphenylphosphat | | | | |

## Patentansprüche

1. Schaumstoffplatten mit einer Dichte von 20 bis 200 g/l und einem Querschnitt von mindestens 50 cm² auf Basis von Styrolpolymerisaten, dadurch gekennzeichnet, daß sie als Flammschutzmittel eine Mischung aus mindestens 12 Gew.-%, bezogen auf die Styrolpolymerisate, aus mindestens einem wasserabspaltenden Metallhydroxid und mindestens einer Phosphorverbindung enthalten.

2. Schaumstoffplatten nach Anspruch 1, dadurch gekennzeichnet, daß als wasserabspaltendes Metallhydroxid Magnesiumhydroxid oder Aluminiumhydroxid eingesetzt werden.

3. Schaumstoffplatten nach Anspruch 1, dadurch gekennzeichnet, daß als Phosphorverbindung roter Phosphor, organische oder anorganische Phosphate, Phosphite oder Phosphonate eingesetzt werden.

4. Schaumstoffplatten nach Anspruch 1, dadurch gekennzeichnet, daß als Phosphorverbindung Triphenylphosphat, Diphenylkresylphosphat, Ammoniumpolyphosphat oder Diphenylphosphat eingesetzt werden.

5. Schaumstoffplatten nach Anspruch 1, dadurch gekennzeichnet, daß das Gewichtsverhältnis von wasserabspaltendem Metallhydroxid zu Phosphorverbindung 1:1 bis 1:5 beträgt.

6. Verfahren zur Herstellung der Schaumstoffplatten nach Anspruch 1, dadurch gekennzeichnet, daß man ein Gemisch aus einem Styrolpolymerisat, 3 bis 15 Gew.-% eines flüchtigen Treibmittels und mindestens 12 Gew.-% einer Mischung aus mindestens einem wasserabspaltenden Metallhydroxid und mindestens einer Phosphorverbindung bei Temperaturen oberhalb des Schmelzpunktes des Styrolpolymerisates extrudiert und verschäumt.
